# EUROPEAN PATENT SPECIFICATION

(11) **EP 2 971 560 B1**
(45) Date of publication and mention of the grant of the patent: **06.05.2020**
(21) Application number: 13878721.3
(22) Date of filing: 16.12.2013
(51) Int. Cl.: F01D 5/28, F01D 5/14, F02C 7/30, C04B 35/56, C04B 35/58, C04B 41/51, F01D 11/12, F01D 11/20, B23K 1/00, B23K 1/19, B23K 20/02, B23K 20/22, B23K 26/00, B23K 26/34, C23C 24/04, F01D 9/04, B23K 103/16, C23C 4/04, C23C 4/134

(54) **MAXMET COMPOSITES FOR TURBINE ENGINE COMPONENT TIPS**
MAXMETKOMPOSITE FÜR TURBINENMOTORKOMPONENTENSPITZEN
MATÉRIAUX COMPOSITES À MAXMET POUR POINTES DE PIÈCES DE MOTEUR À TURBINE

(30) Priority: 15.03.2013 US 201361788056 P
(43) Date of publication of application: 20.01.2016
(73) Proprietor: United Technologies Corporation, Farmington, CT 06032 (US)
(72) Inventor: AMINI, Shahram, East Hartford, Connecticut 06108 (US); STROCK, Christopher W., Kennebunk, Maine 04043 (US); BURLATSKY, Sergei F, West Hartford, Connecticut 06117 (US); NOVIKOV, Dmitri, Avon, Connecticut 06001 (US); FURRER, David Ulrich, Marlborough, Connecticut 06447 (US)
(74) Representative: Dehns
(86) International application number: PCT/US2013/075292
(87) International publication number: WO 2014/149097

(56) References cited:
- FR-A1- 2 024 463
- US-A- 5 059 095
- US-A- 5 059 095
- US-A1- 2004 219 010
- US-A1- 2008 081 172
- US-A1- 2010 055 492
- US-A1- 2010 055 492
- US-A1- 2012 114 929
- US-A1- 2013 052 438

## Description

### BACKGROUND

The present disclosure is directed to the use of MAXMET composites on the tip of an airfoil portion of a turbine engine component for rub and abradability against an abrasive rotor coating. Specifically, the disclosure is directed to a process for manufacturing a turbine engine component.

Compressor technology uses abradable coatings for fuel burn reduction and increases in temperature capability. In some compressor systems, a coating is applied to the tip of an airfoil portion of a compressor blade or vane to rub against an abrasive coating applied to another component. For example, US 5095,095 discloses composite ceramic layers for rotor blade tips, while FR 2024463 suggests use of MAXMET composites in gas turbines. Abradable systems are not currently capable of achieving the full desirable tightest rubs and they suffer from multiple premature failure types due to high rub forces, rough coating surfaces, local heat generation, high coating temperature, blade material transfer, coating spallation, and durability issues at high temperatures. There are several requirements to mitigate issues associated with abradable coatings, such as improved abradable damage tolerance and toughness, improved thermal cycling and durability, tailored thermal expansion, reduced frictional forces and low coefficient of friction, self-lubrication and low energy of cut, high abradable thermal conductivity and higher erosion resistance and desired wear ratio.

### SUMMARY

In accordance with the present disclosure, there is provided a process for manufacturing a turbine engine component which comprises the steps of: providing a MAXMET composite material; providing a partially machined forging of a material to be used to form said turbine engine component; and joining the MAXMET composite material to the partially machined forging; wherein the joining step comprises diffusion bonding and/or transient liquid phase brazing of a MAXMET composite ring to the partially machined forging.

a more detailed embodiment, the process further comprises machining the forging to form an airfoil portion with the MAXMET composite material being joined to a tip of the airfoil portion.

In a more detailed embodiment, the MAXMET composite providing step comprises providing a composite having MAX phases and a metal matrix.

In a more detailed embodiment, the metal matrix is a metal matrix and the MAX phases are defined by the formula Mₙ₊₁AXₙ where M is selected from the early transition metals, A is selected from A-group elements, X is selected from the group consisting of C and N, and n = 1 to 3.

In a more detailed embodiment, the turbine engine component is a vane.

In a more detailed embodiment, the turbine engine component is a blade.

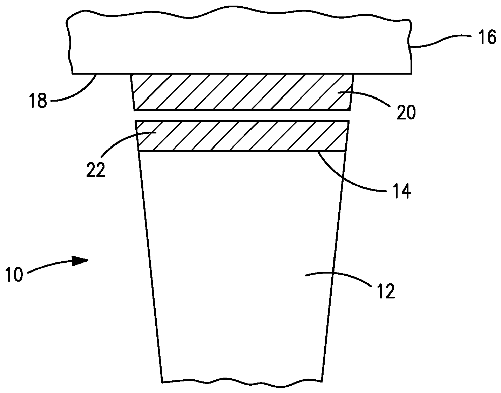

Other details of the MAXMET composites for turbine engine component tips are set forth in the following detailed description and the accompanying drawing wherein like reference numerals depict like elements.

### BRIEF DESCRIPTION OF THE DRAWINGS

The FIGURE is a schematic representation of a MAXMET composite coating applied to a tip of a turbine engine component.

### DETAILED DESCRIPTION

Embodiments of the present invention comprise at least all features and method steps of the appended independent claim.

Referring now to the FIGURE, there is illustrated a turbine engine component 10, such as a compressor blade or vane. The turbine engine component 10 has an airfoil portion 12 with a tip 14. Surrounding the turbine engine component 10 is a casing 16. The interior surface 18 of the casing 16 has an abradable coating 20 applied to it. The abradable coating 20 may be a metal matrix.

The turbine engine component 10 may be formed from a titanium-based alloy or a nickel-based alloy. On the tip 14 of the airfoil portion 12, a composite material 22 is applied for rub and abradability against the abradable coating 20.

The composite material 22 is a MAXMET composite which is a MAX-based metal matrix composite. The composite contain MAX phases which are defined by the formula Mₙ₊₁AXₙ where n is a number from 1 to 3. M is an early transition metal element, A is an A group element, and X is carbon (C) or nitrogen (N). Early transition metals are any element in the d-block of the periodic table, which includes groups 3 to 12 on the periodic table. A-group elements are mostly group IIA or IVA. The metal matrix is at least one of a low, medium, and high melting point metal or metal alloy. Low melting point metals or metal alloys are those approximately in the range of from 100 degrees Centigrade to 300 degrees Centigrade. Medium melting point metals or metal alloys are those approximately in the range of 300 degrees Centigrade to 1000 degrees Centigrade. High melting point metals or metal alloys are those in the range of 1000 degrees Centigrade and greater. MAXMET materials are characterized by excellent mechanical properties and improved toughness, high damage tolerance, high thermal stability and improved erosion resistance.

The composite 22 may be applied to the tip 14 of the airfoil portion 12 by diffusion bonding or transient liquid phase brazing a hot pressed MAXMET composite ring onto a partially machined forging of the material forming the turbine engine component 10 prior to machining of the airfoil portion 12.

MAXMET composites have the potential to reduce frictional forces with low coefficient of friction. The MAXMET composites offer superb machinability with low energy of cut and self-lubricating capability. High thermal conductivity reduces local heat generation and creates cooler rub contact to prevent metal transfer to the abrasive coating. Improved oxidation resistance and improved thermal stability will be beneficial for higher temperature abradable coatings. Strong bonding of MAX phases to metallic matrices increases toughness and provides processing capability with bulk and deposition techniques and ability to process with porosity. Tailored thermal expansion coefficient will also contribute to durability of abradable coatings. MAX phases will be durable in the oxidizing environment of a gas turbine's high pressure compressor up to 900degrees Centigrade and more which exceeds the requirements for use in today's advanced gas turbines.

## Claims

1. A process for manufacturing a turbine engine component (10), said process comprising the steps of:
providing a MAXMET composite material (22);
providing a partially machined forging of a material to be used to form said turbine engine component (10); and
joining said MAXMET composite material (22) to said partially machined forging;
wherein the step of joining the MAXMET composite material (22) to the partially machined forging comprises diffusion bonding or transient liquid phase brazing of a MAXMET composite ring to said partially machined forging of the material to be used to form said turbine engine component (10).

2. The process of claim 1 wherein the MAXMET composite ring is a hot pressed MAXMET composite ring.

3. The process of claim 1 or claim 2, further comprising machining said forging to form an airfoil portion (12) with said MAXMET composite material being joined to a tip (14) of said airfoil portion (12).

4. The process of any preceding claim, wherein said MAXMET composite providing step comprises providing a composite having MAX phases and a metal matrix.

5. The process of claim 4, wherein said metal matrix is at least one of a low, medium, and high melting point metal or metal alloy.

6. The process of claim 4 or claim 5, wherein said MAX phases are defined by the formula Mₙ₊₁AXₙ where M is an early transition metal element, A is an A group element, X is carbon or nitrogen, and n = 1 to 3.

7. The process according to any preceding claim wherein said turbine engine component is a vane or a blade.

## Patentansprüche

1. Verfahren zum Herstellen einer Turbinentriebwerkkomponente (10), wobei das Verfahren folgende Schritte umfasst:
Bereitstellen eines MAXMET-Kompositmaterials (22);
Bereitstellen eines teilweise bearbeiteten Schmiedestücks aus einem Material, das verwendet wird, um die Turbinentriebwerkkomponente (10) zu bilden; und
Verbinden des MAXMET-Kompositmaterials (22) mit dem teilweise bearbeiteten Schmiedestück;
wobei der Schritt des Verbindens des MAXMET-Kompositmaterials (22) mit dem teilweise bearbeiteten Schmiedestück Diffusionsverbinden oder transientes Flüssigphasenlöten eines MAXMET-Kompositrings an das teilweise bearbeitete Schmiedestück aus dem Material umfasst, das verwendet wird, um die Turbinentriebwerkkomponente (10) zu bilden.

2. Verfahren nach Anspruch 1, wobei der MAXMET-Kompositring ein heißgepresster MAXMET-Kompositring ist.

3. Verfahren nach Anspruch 1 oder Anspruch 2, das ferner ein Bearbeiten des Schmiedestücks umfasst, um einen Schaufelprofilabschnitt (12) zu bilden, wobei das MAXMET-Kompositmaterial mit einer Spitze (14) des Schaufelprofilabschnitts (12) verbunden wird.

4. Verfahren nach einem der vorhergehenden Ansprüche, wobei der Schritt des Bereitstellens des MAXMET-Komposits, das Bereitstellen eines Komposits umfasst, das MAX-Phasen und eine Metallmatrix aufweist.

5. Verfahren nach Anspruch 4, wobei die Metallmatrix mindestens eines von einem Metall mit einem niedrigen, mittleren und hohen Schmelzpunkt oder eine Metalllegierung ist.

6. Verfahren nach Anspruch 4 oder Anspruch 5, wobei die MAX-Phasen durch die Formel *M*_{*n*+1}*AXₙ* definiert sind, wobei M ein frühes Übergangsmetallelement ist, A ein A-Gruppen-Element ist, X Kohlenstoff oder Stickstoff ist und n = 1 bis 3 ist.

7. Verfahren nach einem der vorhergehenden Ansprüche, wobei die Turbinentriebwerkkomponente eine Leitschaufel oder eine Laufschaufel ist.

## Revendications

1. Procédé de fabrication d'un composant de moteur à turbine (10), ledit procédé comprenant les étapes :
de fourniture d'un matériau composite à MAXMET (22) ;
de fourniture d'une pièce forgée partiellement usinée d'un matériau à utiliser pour former ledit composant de moteur à turbine (10) ; et
l'assemblage dudit matériau composite à MAXMET (22) à ladite pièce forgée partiellement usinée ;
dans lequel l'étape d'assemblage du matériau composite à MAXMET (22) à la pièce forgée partiellement usinée comprend le soudage par diffusion ou le brasage de phase liquide transitoire d'un anneau composite à MAXMET à ladite pièce forgée partiellement usinée du matériau à utiliser pour former ledit composant de moteur à turbine (10).

2. Procédé selon la revendication 1, dans lequel l'anneau composite à MAXMET est un anneau composite à MAXMET pressé à chaud.

3. Procédé selon la revendication 1 ou la revendication 2, comprenant en outre l'usinage de ladite pièce forgée pour former une partie de surface portante (12) avec ledit matériau composite à MAXMET assemblé à une pointe (14) de ladite partie de surface portante (12).

4. Procédé selon une quelconque revendication précédente, dans lequel ladite étape de fourniture de composite à MAXMET comprend la fourniture d'un composite ayant des phases MAX et une matrice métallique.

5. Procédé selon la revendication 4, dans lequel ladite matrice métallique est au moins l'un d'un métal à point de fusion bas, moyen et élevé ou d'un alliage métallique.

6. Procédé selon la revendication 4 ou la revendication 5, dans lequel lesdites phases MAX sont définies par la formule Mₙ₊₁AXₙ où M est un élément de métal de transition précoce, A est un élément du groupe A, X est du carbone ou de l'azote et n = 1 à 3.

7. Procédé selon une quelconque revendication précédente, dans lequel ledit composant de moteur à turbine est une aube ou une pale.
